# EUROPÄISCHE PATENTSCHRIFT

(11) **EP 4 297 996 B1**
(45) Veröffentlichungstag und Bekanntmachung des Hinweises auf die Patenterteilung: **19.11.2025**
(21) Anmeldenummer: 22708533.9
(22) Anmeldetag: 21.02.2022
(51) Int. Cl.: B60R 21/0132, A41D 13/018, B62J 27/20, B60R 21/00, B60R 21/01

(54) **VERFAHREN UND ANORDNUNG ZUR ZUORDNUNG VON MINDESTENS EINEM SCHUTZBEKLEIDUNGSSTÜCK ZU MINDESTENS EINEM KABINENLOSEN FAHRZEUG**
METHOD AND ARRANGEMENT FOR ASSOCIATING AT LEAST ONE ITEM OF PROTECTIVE CLOTHING WITH AT LEAST ONE CABINLESS VEHICLE
PROCÉDÉ ET DISPOSITIF POUR ASSOCIER AU MOINS UN VÊTEMENT DE PROTECTION À AU MOINS UN VÉHICULE SANS CABINE

(30) Priorität: 24.02.2021 DE 102021104415
(43) Veröffentlichungstag der Anmeldung: 03.01.2024
(73) Patentinhaber: Robert Bosch GmbH, 70442 Stuttgart (DE)
(72) Erfinder: GUEBNER, Sascha, 31162 Bodenburg (DE); MORGENROTH, Johannes, 31139 Hildesheim (DE); HOFMANN, Frank, 31139 Hildesheim (DE); SCHUMACHER, Jan, 71636 Ludwigsburg (DE)
(86) Internationale Anmeldenummer: PCT/EP2022/054240
(87) Internationale Veröffentlichungsnummer: WO 2022/179981

(56) Entgegenhaltungen:
- EP-A1- 2 632 771
- EP-A1- 3 171 723
- EP-B1- 1 703 815
- DE-C1- 10 104 019

## Beschreibung

Die Erfindung geht aus von einem Verfahren zur Zuordnung von mindestens einem Schutzbekleidungsstück zu mindestens einem kabinenlosen Fahrzeug. Gegenstand der vorliegenden Erfindung ist auch eine Anordnung zur Durchführung eines solchen Verfahrens zur Zuordnung von mindestens einem Schutzbekleidungsstück zu mindestens einem kabinenlosen Fahrzeug sowie eine Schutzanordnung in einem Schutzbekleidungsstück und eine Schutzanordnung in einem kabinenlosen Fahrzeug.

Moderne Schutzbekleidung, wie beispielsweise Helme oder Jacken, für Aufsassen eines kabinenlosen Fahrzeugs, welches beispielsweise als Zweirad, Trike, Quad oder Ähnliches ausgeführt ist, sind mit Airbagsystemen ausgestattet, welche beim Erkennen eines Unfalls automatisch auslösen und den Fahrer vor schweren Verletzungen schützen können. Diese Systeme können entweder drahtgebunden mit dem Fahrzeug verbunden sein oder autark arbeiten und das Auslöseereignis anhand eigener in der Schutzbekleidung verbauter Sensoren bestimmen. Weiterhin existieren Systeme, die eine drahtlose Kommunikation zwischen der Schutzbekleidung und dem kabinenlosen Fahrzeug nutzen. Eine solche drahtlose Kommunikationsverbindung hilft die Zuverlässigkeit und Genauigkeit solcher Systeme weiter zu verbessern, indem eine fahrzeuggestützte Unfallerkennung frühzeitig an die Schutzbekleidung übermittelt werden kann.

So ist beispielsweise aus der DE 101 04 019 C1 ein Motorradschutzanzug bekannt, welcher wenigstens einen Airbag aufweist, wobei die Energieversorgung und die Datenkommunikation mit dem Motorrad über eine drahtlose Verbindung realisiert wird. Für die Energieübertragung werden Spulen in den Gesäßflächen des Motorradschutzanzugs und für die Datenübertragung Kommunikationseinrichtungen im Mikrowellenbereich eingesetzt.

Ein großes Problem bei der Verwendung der drahtlosen Kommunikation besteht jedoch in der Zuordnung der Schutzbekleidung zu einem Fahrzeug. Insbesondere bei mehreren Fahrzeugen und Schutzbekleidungen in Funkreichweite kann sich ein Zuordnungsproblem ergeben, welche Schutzbekleidung bzw. Schutzbekleidungen von Aufsassen auf welchem Fahrzeug fahren. Im Auslösefall ist eine eindeutige Zuordnung, welche Schutzbekleidungen auslösen müssen, jedoch zwingend notwendig. Im Falle mehrerer Aufsassen mit entsprechender Schutzbekleidung und mehreren Fahrzeugen in Funkreichweite, ist eine Unterscheidung welcher Aufsasse auf welchem Fahrzeug sitzt und damit, welche Schutzbekleidung im Falle eines Unfalls auslösen muss nicht trivial.

Ein naheliegender Ansatz besteht darin, direkt vor Fahrtantritt eine Schutzbekleidung und ein zu verwendetes Fahrzeug durch ein Zuordnungsverfahren manuell zu koppeln.

So ist beispielsweise aus der EP 1 703 815 B1 ein Schutzbekleidungsstück bekannt, welches mindestens eine aufblasbare Schutzvorrichtung aufweist und derart ausgeführt ist, dass es durch eine Person getragen werden kann, welche sich mit einem kabinenlosen Fahrzeug bewegt. Das Schutzbekleidungsstück umfasst eine Energieversorgungseinheit, einen Funkempfänger, welcher ausgeführt ist, über einen Identifikationscode mit einem zugeordneten, entfernten Funksender drahtlos zu kommunizieren, der an dem kabinenlosen Fahrzeug angeordnet ist, eine Aktivierungsschaltung zum Aktivieren der mindestens einer aufblasbaren Schutzvorrichtung als Reaktion auf ein von dem Funksender empfangenem Alarmsignal, und einen nichtflüchtigen Speicher. Zudem umfasst das Schutzbekleidungsstück mindestens eine programmierbare Logikeinheit, welche mit dem Funkempfänger verbunden ist. Die mindestens eine programmierbare Logikeinheit verwaltet und speichert die über den Funkempfänger empfangenen Identifikationscodes in mindestens einem der nichtflüchtigen Speicher ab. Zudem ermöglicht die mindestens eine programmierbare Logikeinheit der das Schutzbekleidungsstück tragenden Person über eine Benutzerschnittstelle einen speziellen von den in dem mindestens einen nichtflüchtigen Speicher verfügbaren Codes auszuwählen. Die Benutzerschnittstelle umfasst mindestens einen Druccknopf und einen Bildschirm mit einem korrespondierenden Treiberkreis. Zur Zuordnung des Schutzbekleidungsstücks zu einem kabinenlosen Fahrzeug sendet ein fahrzeugseitiges Modul, welches eine Logikeinheit einen Codierer und den Funksender umfasst, einen seriellen Identifikationscode aus. Die Komponenten im Schutzbekleidungsstück befinden sich bei Nichtgebrauch in einem inaktiven Zustand mit einem sehr geringen Energieverbrauch. Wenn einer der mindestens eine Druckknopf gedrückt wird, prüft die Logikeinheit des Schutzbekleidungsstücks den Wert der Versorgungsspannung und sucht über den Empfänger und den Decoder einen gültigen seriellen Identifikationscode, welcher von dem fahrzeugseitigen Modul ausgesendet wird. Wenn die Logikeinheit des Schutzbekleidungsstücks einen oder mehrere seriellen Identifikationscode findet, speichert sie diese im nichtflüchtigen Speicher und zeigt sie über die zugehörige Treiberschaltung auf dem Bildschirm an. Mit Hilfe des mindestens einen Druckknopfs kann der Benutzer an dieser Stelle unter den angezeigten seriellen Identifikationscodes den auswählen, der dem zu verwendenden kabinenlosen Fahrzeug entspricht. Um die Zuordnung des kabinenlosen Fahrzeugs zu vereinfachen, zeigt die Logikeinheit bei der Analyse der im Speicher gespeicherten Werte zunächst den zuletzt verwendeten seriellen Identifikationscode auf dem Bildschirm an. Während der Fahrt überträgt das fahrzeugseitige Modul den seriellen Identifikationscode und ein Aktivierungssignal an die Logikeinheit des Schutzbekleidungsstücks, wenn ein durch eine fahrzeugseitige Sensoreinheit erfasstes Beschleunigungssignal einen vorgegebenen Schwellwert überschreitet. In Reaktion auf das empfangene Aktivierungssignal aktiviert die Logikeinheit die mindestens eine Schutzvorrichtung des Schutzbekleidungsstücks.

Als nachteilig kann hierbei angesehen werden, dass jedes Mal vor Fahrtantritt eine Fahrerinteraktion erforderlich ist, indem beispielsweise ein Knopf am Schutzbekleidungsstück und/oder am Fahrzeug betätigt werden muss, um bei mehreren Fahrzeugen bzw. Schutzbekleidungen in der Nähe die richtige Zuordnung zwischen Fahrzeug und Schutzbekleidung(-en) zu finden.

EP2632771B1 offenbart eine Vorrichtung, ein System und ein Verfahren für Schutzbekleidung.

### Offenbarung der Erfindung

Das Verfahren zur Zuordnung von mindestens einem Schutzbekleidungsstück zu mindestens einem kabinenlosen Fahrzeug mit den Merkmalen des unabhängigen Patentanspruchs 1 sowie die Anordnung zum Ausführen des Verfahren zur Zuordnung von mindestens einem Schutzbekleidungsstück zu mindestens einem kabinenlosen Fahrzeug mit den Merkmalen des unabhängigen Patentanspruchs 12 und die Schutzanordnung in einem Schutzbekleidungsstück mit den Merkmalen des unabhängigen Patentanspruchs 16 und die Schutzanordnung in einem kabinenlosen Fahrzeug mit den Merkmalen des unabhängigen Patentanspruchs 17 haben jeweils den Vorteil, dass eine statische Zuordnung des mindestens einen Schutzbekleidungsstück mit einer manuellen Interkation nur einmal erforderlich ist. Dadurch können einem kabinenlosen Fahrzeug mehrere Schutzbekleidungsstücke statisch zugeordnet werden. Zusätzlich oder alternativ kann ein Schutzbekleidungsstück mehreren kabinenlosen Fahrzeugen statisch zugeordnet werden. Bei Bedarf, beispielsweise bei einem Verkauf des kabinenlosen Fahrzeugs bzw. einer Entsorgung des Schutzbekleidungsstücks, können die statischen Zuordnungen wieder aufgehoben werden.

Durch die vorgeschlagene zumindest bei jedem Fahrtantritt durchgeführte automatische dynamische Zuordnung des mindestens einen Schutzbekleidungsstücks zum verwendeten Fahrzeug wird das mindestens eine Schutzbekleidungsstück ohne weitere Interaktion des Aufsassen für die aktuelle Fahrt dynamisch dem verwendeten kabinenlosen Fahrzeug zugeordnet, so dass das kabinenlose Fahrzeug bei einem erkannten Unfall mindestens eine Schutzvorrichtung in dem mindestens einen Schutzbekleidungsstück aktivieren kann. Bei der automatischen dynamischen Zuordnung wird mindestens eine zusätzliche Zustandsgröße des mindestens einen Schutzbekleidungsstücks und/oder des verwendeten kabinenlosen Fahrzeugs erfasst und in dem mindestens einen Schutzbekleidungsstück und/oder dem verwendeten kabinenlosen Fahrzeug ausgewertet. Dadurch können im Falle von mehreren Schutzbekleidungsstücken und mehreren kabinenlosen Fahrzeugen in Reichweite der drahtlosen Kommunikation falschen Zuordnungen von Schutzbekleidungsstücken und kabinenlosen Fahrzeugen in vorteilhafter Weise verhindert werden.

Da die automatische dynamische Zuordnung des mindestens einen Schutzbekleidungsstücks zu dem verwendeten kabinenlosen Fahrzeug nur für die aktuelle Fahrt durchgeführt wird, kann selbst dann keine falsche Zuordnung der Schutzbekleidungsstücke auftreten, wenn bei einem Zwischenstopp ein Fahrzeugwechsel von einem oder mehreren Aufsassen durchgeführt wird. So können beispielsweise zwei Fahrer ihre Fahrzeuge tauschen, oder es kann nur ein Aufsasse, wie beispielsweise ein Sozius eines Fahrzeugs auf ein anderes Fahrzeug wechseln. Dadurch kann im Falle eines Unfalls verhindert werden, dass die Schutzbekleidung des Verunfallten nicht auslöst, wohl aber die, des nicht verunfallten Aufsassen, welcher sich in Reichweite der drahtlosen Kommunikationsverbindung bewegt. Als Voraussetzung für einen solchen Fahrzeugwechsel werden die korrespondierenden Schutzbekleidungsstücke beiden kabinenlosen Fahrzeugen statisch zugeordnet.

Ausführungsformen der vorliegenden Erfindung stellen ein Verfahren zur Zuordnung von mindestens einem Schutzbekleidungsstück zu mindestens einem kabinenlosen Fahrzeug zur Verfügung, wobei das mindestens eine Schutzbekleidungsstück mindestens eine Schutzvorrichtung aufweist, welche während einer Fahrt von dem verwendeten kabinenlosen Fahrzeug aktivierbar ist, wobei das mindestens eine Schutzbekleidungsstück und das mindestens eine kabinenlose Fahrzeug bei einer gegenseitigen statischen Zuordnung durch eine bidirektionale drahtlose Kommunikation entsprechende eindeutige Authentifizierungsinformationen austauschen und speichern. Hierbei wird unter Verwendung der Authentifizierungsinformationen der statischen Zuordnung zumindest bei jedem Fahrtantritt mindestens eine zusätzliche Zustandsgröße des mindestens einen Schutzbekleidungsstücks und/oder des verwendeten kabinenlosen Fahrzeugs erfasst und in dem mindestens einen Schutzbekleidungsstück und/oder dem verwendeten kabinenlosen Fahrzeug ausgewertet wird, und wobei eine dynamische Zuordnung der mindestens einen Schutzvorrichtung zu dem verwendeten kabinenlosen Fahrzeug für die aktuelle Fahrt durchgeführt wird, wenn bei der Auswertung der mindestens einen zusätzlichen Zustandsgröße mindestens eine vorgegebene Bedingung erfüllt ist.

Zudem wird eine Anordnung mit mindestens einem Schutzbekleidungsstück und mindestens einem kabinenlosen Fahrzeug vorgeschlagen, welche eingerichtet ist, das erfindungsgemäße Verfahren auszuführen. Hierbei weist das mindestens eine Schutzbekleidungsstück mindestens eine Schutzvorrichtung auf, welche während einer Fahrt von einem verwendeten kabinenlosen Fahrzeug aktivierbar ist. Zudem weist das mindestens eine kabinenlose Fahrzeug eine erste Kommunikationseinrichtung auf, und das mindestens eine Schutzbekleidungsstück weist eine zweite Kommunikationseinrichtung auf, wobei die erste Kommunikationseinrichtung und die zweite Kommunikationseinrichtung ausgeführt sind, eine drahtlose Kommunikationsverbindung zwischen dem mindestens einen Schutzbekleidungsstück und dem mindestens einen kabinenlosen Fahrzeug aufzubauen. Eine erste Auswerte- und Steuereinheit des mindestens einen kabinenlosen Fahrzeugs und eine zweite Auswerte- und Steuereinheit des mindestens einen Schutzbekleidungsstücks sind ausgeführt, durch einen einmaligen Austausch und eine einmalige Speicherung von entsprechenden eindeutigen Authentifizierungsinformationen über eine bidirektionale drahtlose Kommunikation eine gegenseitige statische Zuordnung durchzuführen. Die erste Auswerte- und Steuereinheit des mindestens einen kabinenlosen Fahrzeugs und/oder die zweite Auswerte- und Steuereinheit des mindestens einen Schutzbekleidungsstück sind weiter ausgeführt, zumindest vor jedem Fahrtantritt unter Verwendung der Authentifizierungsinformationen der statischen Zuordnung mindestens eine zusätzliche Zustandsgröße des mindestens einen Schutzbekleidungsstücks des Aufsassen und/oder des verwendeten kabinenlosen Fahrzeugs zu erfassen und auszuwerten, wobei die erste Auswerte- und Steuereinheit des verwendeten kabinenlosen Fahrzeugs und/oder die zweite Auswerte- und Steuereinheit des mindestens einen Schutzbekleidungsstücks weiter ausgeführt sind, eine dynamische Zuordnung der mindestens einen Schutzvorrichtung zu dem verwendeten kabinenlosen Fahrzeug für die aktuelle Fahrt durchzuführen, wenn bei der Auswertung der mindestens einen zusätzlichen Zustandsgröße mindestens eine vorgegebene Bedingung erfüllt ist.

Des Weiteren wird eine Schutzanordnung in einem Schutzbekleidungsstück vorgeschlagen, welche eingerichtet ist, in Kombination mit einer Schutzanordnung in einem kabinenlosen Fahrzeug das erfindungsgemäße Verfahren auszuführen. Die Schutzanordnung im Schutzbekleidungsstück umfasst mindestens eine Schutzvorrichtung, welche während einer Fahrt von einem verwendeten kabinenlosen Fahrzeug aktivierbar ist, eine Kommunikationseinrichtung, welche ausgeführt ist, eine drahtlose Kommunikationsverbindung mit mindestens einem kabinenlosen Fahrzeug aufzubauen, und eine Auswerte- und Steuereinheit, welche ausgeführt ist, über die Kommunikationseinrichtung eine bidirektionale drahtlose Kommunikation mit dem mindestens einen kabinenlosen Fahrzeug zu führen und in Kommunikation mit dem kabinenlosen Fahrzeug einen einmaligen Austausch und eine einmalige Speicherung von entsprechenden eindeutigen Authentifizierungsinformationen und eine gegenseitige statische Zuordnung des mindestens einen kabinenlosen Fahrzeugs durchzuführen. Hierbei ist die bekleidungsseitige Auswerte- und Steuereinheit weiter ausgeführt, zumindest vor jedem Fahrtantritt unter Verwendung der Authentifizierungsinformationen der statischen Zuordnung mindestens eine zusätzliche Zustandsgröße des mindestens einen Schutzbekleidungsstücks des Aufsassen und/oder des verwendeten kabinenlosen Fahrzeugs zu erfassen und in Kommunikation mit dem verwendeten kabinenlosen Fahrzeug auszuwerten, wobei die bekleidungsseitigen Auswerte- und Steuereinheit weiter ausgeführt ist, eine dynamische Zuordnung der mindestens einen Schutzvorrichtung zu dem verwendeten kabinenlosen Fahrzeug für die aktuelle Fahrt durchzuführen, wenn bei der Auswertung der mindestens einen zusätzlichen Zustandsgröße mindestens eine vorgegebene Bedingung erfüllt ist.

Außerdem wird eine Schutzanordnung in einem kabinenlosen Fahrzeug vorgeschlagen, welche eingerichtet ist, in Kombination mit einer Schutzanordnung in einem Schutzbekleidungsstück das erfindungsgemäße Verfahren auszuführen. Die Schutzanordnung im kabinenlosen Fahrzeug umfasst eine Kommunikationseinrichtung, welche ausgeführt ist, eine drahtlose Kommunikationsverbindung mit mindestens einem Schutzbekleidungsstück aufzubauen, und eine Auswerte- und Steuereinheit, welche ausgeführt ist, über die Kommunikationseinrichtung eine bidirektionale drahtlose Kommunikation mit dem mindestens einen Schutzbekleidungsstück zu führen und in Kommunikation mit dem mindestens einen Schutzbekleidungsstück einen einmaligen Austausch und eine einmalige Speicherung von entsprechenden eindeutigen Authentifizierungsinformationen und eine gegenseitige statische Zuordnung des mindestens einen Schutzbekleidungsstücks durchzuführen. Hierbei ist die fahrzeugseitige Auswerte- und Steuereinheit weiter ausgeführt, zumindest vor jedem Fahrtantritt unter Verwendung der Authentifizierungsinformationen der statischen Zuordnung mindestens eine zusätzliche Zustandsgröße des mindestens einen Schutzbekleidungsstücks des Aufsassen und/oder des verwendeten kabinenlosen Fahrzeugs zu erfassen und in Kommunikation mit dem mindestens einen Schutzbekleidungsstücks des Aufsassen auszuwerten, wobei die fahrzeugseitige Auswerte- und Steuereinheit weiter ausgeführt ist, eine dynamische Zuordnung der mindestens einen Schutzvorrichtung zu dem verwendeten kabinenlosen Fahrzeug für die aktuelle Fahrt durchzuführen, wenn bei der Auswertung der mindestens einen zusätzlichen Zustandsgröße mindestens eine vorgegebene Bedingung erfüllt ist.

Unter einem Schutzbekleidungsstück wird nachfolgend beispielsweise eine Jacke oder ein Helm verstanden, welche mit einer aktivierbaren Schutzvorrichtung ausgestattet ist. Die Schutzvorrichtung ist vorzugsweise als aufblasbarer Airbag ausgeführt.

Unter der statischen gegenseitigen Zuordnung des mindestens einen Schutzbekleidungsstücks zu dem mindestens einen kabinenlosen Fahrzeug wird nachfolgend ein Vorgang verstanden, bei welchem das mindestens eine Schutzbekleidungsstück und das korrespondierende kabinenlose Fahrzeug einmalig initial manuell assoziiert werden. Hierzu können eindeutige Authentifizierungsinformationen von Fahrzeug und Schutzbekleidungsstück oder ein Authentifizierungstag an der Schutzkleidung verwendet, welcher am Fahrzeug, beispielsweise als "Schutzbekleidungsstück XY", dargestellt werden kann. Durch eine manuelle Interaktion, beispielsweise über einen Druckknopf, kann sichergestellt werden, dass die Assoziierung zwischen genau dem gewünschten Schutzbekleidungsstück und dem gewünschten kabinenlosen Fahrzeug stattfindet. Bei diesem Vorgang kann beispielsweise ein im Fahrzeug erzeugter geheimer Schlüssel als Authentifizierungsinformation durch bekannte und erprobte Verfahren ausgetauscht werden. Der erzeugte geheime Schlüssel kann in nachfolgenden Assoziationen auch anderen Schutzbekleidungsstücken mitgeteilt werden, welche mit dem Fahrzeug assoziiert werden sollen. Somit wird ermöglicht, dass mehrere Schutzbekleidungsstücke dem Fahrzeug statisch zugeordnet werden können, wie es beispielsweise beim Fahren mit mehreren Aufsassen durchaus erforderlich sein kann. Des Weiteren kann eine Schutzbekleidungsstück auch mit mehreren Fahrzeugen assoziiert sein, beispielsweise wenn ein Fahrer mehrere Fahrzeuge abwechselnd fahren möchte. Dies wird durch Speicherung mehrerer der geheimen fahrzeugspezifischen Schlüssel ermöglicht.

Durch diese initiale Assoziation bzw. die statische Zuordnung mittels eindeutiger Authentifizierungsinformationen können potentielle Angriffs- oder Manipulationsszenarien verhindert werden. Ohne dieses Verfahren könnte sich ein Angreifer als Fahrzeug ausgeben und gefälschte Daten zur automatischen dynamischen Zuordnung schicken. Dies würde schlimmstenfalls das Auslösen des Schutzbekleidungsstücks nach Fahrtantritt ermöglichen und so dem Fahrer ein unnötiges Unfallrisiko aussetzen.

Ausführungsformen der vorliegenden Erfindung ermöglichen in vorteilhafter Weise bei Fahrtbeginn eine automatische zuverlässige dynamische Zuordnung, welche Schutzbekleidung bzw. welche Schutzbekleidungen welchem Fahrzeug zugeordnet sind. Dabei kann basierend auf der einmaligen statischen Zuordnung des mindestens einen Schutzbekleidungsstücks zu dem verwendeten kabinenlosen Fahrzeug bei Fahrtbeginn eine automatische dynamische Zuordnung zwischen einem einzigen Schutzbekleidungsstück und dem verwendeten kabinenlosen Fahrzeug oder zwischen mehreren Schutzbekleidungsstücken und dem verwendeten kabinenlosen Fahrzeug durchgeführt werden. Während der Fahrt kann dann das kabinenlose Fahrzeug bei einem erkannten Unfall durch eine weitere drahtlose Kommunikation die mindestens eine Schutzvorrichtung des dynamisch dem Fahrzeug zugeordneten Bekleidungsstücks aktivieren.

Für die automatische dynamische Zuordnung werden die initial aufgebauten Assoziationen bzw. Authentifizierungsinformationen der statischen Zuordnung genutzt, um eine gesicherte drahtlose Kommunikationsverbindung über eine konkrete Fahrt hinweg aufzubauen. Dazu wird vom Fahrzeug bei Fahrtbeginn, unter Verwendung der zuvor ausgetauschten geheimen Schlüssel, eine gesicherte drahtlose Kommunikation initiiert, an welcher Schutzbekleidungsstücke in Reichweite teilnehmen, wenn sie vorab dem verwendeten Fahrzeug statisch zugeordnet bzw. mit dem verwendeten Fahrzeug assoziiert wurden. Ein Schutzbekleidungsstück kann bei mehreren Fahrzeugen in Reichweite auch an mehreren drahtlosen Kommunikationen teilnehmen. Dabei prüft das Schutzbekleidungsstück anhand der versendeten Daten der Fahrzeuge in Reichweite, auf welchem Fahrzeug das Schutzbekleidungsstück mitfährt. Wenn die automatische dynamische Zuordnung des Schutzbekleidungsstücks möglich war, wird für diese Fahrt die Kommunikationsverbindung mit diesem Fahrzeug in dem Schutzbekleidungsstück als aktiv markiert. Das bedeutet, dass nur Aktivierungssignale zur Aktivierung der mindestens einen Schutzvorrichtung von dem als aktiv markierten Fahrzeug für diese Fahrt berücksichtigt werden. Das Schutzbekleidungsstück kann für eine Fahrt nur ein Fahrzeug als aktiv markieren, aber auch für Fahrten mit anderen Fahrzeugen verwendet werden.

Unter einer Auswerte- und Steuereinheit kann vorliegend eine elektrische Schaltung verstanden werden, welche erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Zuordnung von mindestens einem Schutzbekleidungsstück zu mindestens einem kabinenlosen Fahrzeug und der im unabhängigen Patentanspruch 12 angegebenen Anordnung zur Zuordnung von mindestens einem Schutzbekleidungsstück zu mindestens einem kabinenlosen Fahrzeug möglich.

Besonders vorteilhaft ist, dass bei der statischen Zuordnung eine erste Authentifizierungsinformation des mindestens einen Schutzbekleidungsstücks in dem mindestens einen Fahrzeug und eine zweite Authentifizierungsinformation des mindestens einen Fahrzeugs in dem mindestens einen Schutzbekleidungsstück gespeichert wird. Dadurch kann einfach eine gesicherte drahtlose Kommunikationsverbindung zwischen dem mindestens einen Schutzbekleidungsstück und dem kabinenlosen Fahrzeug aufgebaut werden.

In vorteilhafter Ausgestaltung des Verfahrens kann die mindestens eine zusätzliche Zustandsgröße zur Ermittlung eines Abstands zwischen dem mindestens einen Schutzbekleidungsstück und dem verwendeten kabinenlosen Fahrzeugs ausgewertet werden. So kann das mindestens eine Schutzbekleidungsstück für die aktuelle Fahrt dem verwendeten kabinenlosen Fahrzeug zugeordnet werden, wenn der ermittelte Abstand innerhalb eines vorgegebenen Bereichs liegt.

Bei einer besonders vorteilhaften Ausgestaltung des Verfahrens kann eine erste zusätzliche Zustandsgröße einer wirksamen ersten Beschleunigungsinformation des mindestens einen Schutzbekleidungsstücks entsprechen und eine zweite Zustandsgröße kann einer wirksamen zweiten Beschleunigungsinformation des korrespondierenden kabinenlosen Fahrzeugs entsprechen. Hierbei kann das mindestens eine Schutzbekleidungsstück für die aktuelle Fahrt dem korrespondierenden kabinenlosen Fahrzeug dynamisch zugeordnet werden, wenn die erfasste wirksame erste Beschleunigungsinformation des mindestens einen Schutzbekleidungsstücks und die erfasste wirksame zweite Beschleunigungsinformation des korrespondierenden kabinenlosen Fahrzeugs innerhalb eines vorgegebenen Toleranzbereichs identisch sind.

In weiterer vorteilhafter Ausgestaltung des Verfahrens kann die mindestens eine zusätzliche Zustandsgröße einer Authentifizierungsinformation entsprechen, welche optisch sichtbar oder als auslesbarer Transponder an dem mindestens einen Schutzbekleidungsstück angeordnet sein kann und von einer fahrzeugseitigen Sensorvorrichtung erfasst und ausgewertet werden kann. Hierbei kann das mindestens eine Schutzbekleidungsstück für die aktuelle Fahrt dem korrespondierenden kabinenlosen Fahrzeug dynamisch zugeordnet werden, wenn die erfasste oder ausgelesene Authentifizierungsinformation einer Authentifizierungsinformation eines statisch dem verwendeten kabinenlosen Fahrzeugs zugeordneten Schutzbekleidungsstücks entspricht.

In weiterer vorteilhafter Ausgestaltung des Verfahrens kann die mindestens eine zusätzliche Zustandsgröße einem Motorgeräusch entsprechen, welches durch das verwendete kabinenlose Fahrzeug erzeugt wird und von einer bekleidungsseitigen akustischen Sensorvorrichtung erfasst und ausgewertet werden kann. Hierbei kann das mindestens eine Schutzbekleidungsstück für die aktuelle Fahrt dem korrespondierenden kabinenlosen Fahrzeug dynamisch zugeordnet werden, wenn die erfassten und ausgewerteten Motorgeräusche mit Zustandsdaten des Motors des verwendeten kabinenlosen Fahrzeugs korrespondieren.

In weiterer vorteilhafter Ausgestaltung des Verfahrens kann die automatische dynamische Zuordnung des mindestens einen Schutzbekleidungsstück mindestens eines Aufsassen zu dem verwendeten Fahrzeug direkt nach einem Aktivieren des verwendeten Fahrzeugs, dies entspricht bei einem Fahrzeug mit Verbrennungsmotor einem Einschalten der Zündung, und vor Fahrtbeginn oder innerhalb eines Zeitfensters nach Fahrtbeginn durchgeführt werden. Zudem kann die dynamische Zuordnung des mindestens einen Schutzbekleidungsstück des mindestens einen Aufsassen zu dem verwendeten Fahrzeug periodisch oder ereignisgesteuert während der Fahrt überprüft werden. So kann je nach Technologie und Eindeutigkeit die automatisierte dynamische Zuordnung entweder vor Fahrtbeginn oder kurz danach stattfinden. Eine dynamische Zuordnung nach dem Fahrbeginn gilt als gefunden, wenn die Kreuzkorrelation der Daten, unter Berücksichtigung anderer Fahrzeuge, eine hinreichend hohe Übereinstimmung zeigt. Eine gefundene dynamische Zuordnung kann dem Fahrer zusätzlich am Fahrzeug signalisiert werden, so dass dieser bei Bedarf die Möglichkeit hat korrigierend einzugreifen. Weiterhin kann man die Überprüfung der dynamischen Zuordnung entweder nach der ersten dynamischen Zuordnung mit hinreichend hoher Konfidenz beenden oder kontinuierlich während der Fahrt fortsetzen. Letzteres ermöglicht die permanente Plausibilisierung der Daten und kann dem Fahrer eine fehlende Korrelation signalisieren.

In weiterer vorteilhafter Ausgestaltung des Verfahrens kann die dynamische Zuordnung des mindestens einen Schutzbekleidungsstück des mindestens einen Aufsassen zu dem verwendeten Fahrzeug nach Fahrtende wieder aufgehoben werden. Das Fahrtende kann beispielsweise nach einem Fahrzeugstopp, welcher durch ein Ausklappen eines Ständers erkannt wird, oder nach einem Deaktivieren des Fahrzeugs, dies entspricht bei einem Fahrzeug mit Verbrennungsmotor einem Abschalten der Zündung, erkannt werden.

In vorteilhafter Ausgestaltung der Anordnung kann das mindestens eine Schutzbekleidungsstück mindestens eine nichtflüchtige Speichereinrichtung aufweisen, welche ausgeführt ist, eine erste Authentifizierungsinformation von mindestens einem Fahrzeug zu speichern. Zudem kann das mindestens eine Fahrzeug mindestens eine nichtflüchtige Speichereinrichtung aufweisen, welche ausgeführt ist, eine zweite Authentifizierungsinformation von mindestens einem Schutzbekleidungsstück zu speichern. Durch die verschiedenen Authentifizierungsinformationen ist es möglich, mehrere verschiedene Schutzbekleidungsstücke einem kabinenlosen Fahrzeug statisch zuzuordnen, bzw. mehrere Fahrzeuge einem Schutzbekleidungsstück statisch zuzuordnen.

In weiterer vorteilhafter Ausgestaltung der Anordnung kann das mindestens eine Schutzbekleidungsstück und/oder das mindestens eine kabinenlose Fahrzeugs mindestens eine Sensoreinrichtung aufweisen, welche ausgeführt ist, die mindestens eine zusätzliche Zustandsgröße zu erfassen. Unter einer Sensoreinheit wird vorliegend eine Baueinheit verstanden, welche mindestens ein Sensorelement umfasst, welches eine physikalische Größe bzw. eine Änderung einer physikalischen Größe direkt oder indirekt erfasst und vorzugsweise in ein elektrisches Sensorsignal umwandelt.

In weiterer vorteilhafter Ausgestaltung der Anordnung kann das mindestens eine kabinenlose Fahrzeug mindestens eine Anzeigevorrichtung aufweisen, welche einen augenblicklichen Zustand der dynamischen Zuordnung zwischen dem verwendeten kabinenlosen Fahrzeugs und dem mindestens einen Schutzbekleidungsstück des mindestens einen Aufsassen anzeigen kann.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Ablaufdiagramm eines Ausführungsbeispiels eines erfindungsgemäßen Verfahrens zur Zuordnung von mindestens einem Schutzbekleidungsstück zu mindestens einem kabinenlosen Fahrzeug.
Fig. 2 zeigt ein schematisches Blockdiagramm eines Ausführungsbeispiels einer erfindungsgemäßen Anordnung zur Zuordnung von mindestens einem Schutzbekleidungsstück zu mindestens einem kabinenlosen Fahrzeug, welche ausgeführt ist, das erfindungsgemäße Verfahren aus Fig. 1 auszuführen.

### Ausführungsformen der Erfindung

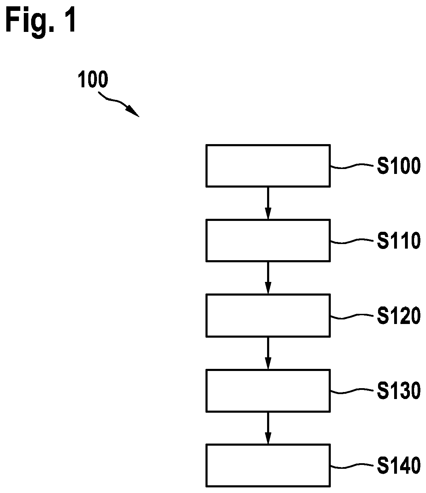

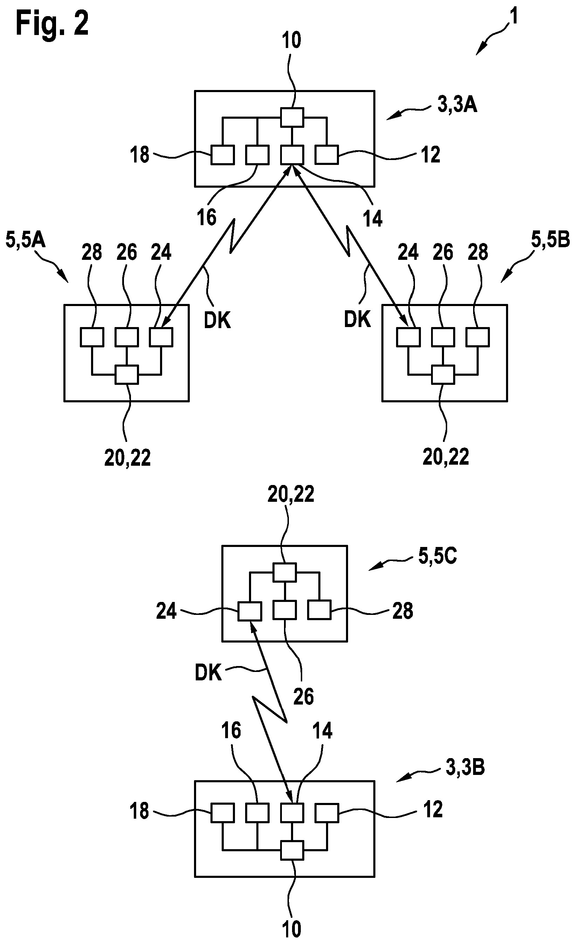

Wie aus Fig. 1 und 2 ersichtlich ist, umfasst das dargestellte Ausführungsbeispiel eines erfindungsgemäßen Verfahrens 100 zur Zuordnung von mindestens einem Schutzbekleidungsstück 5, welches mindestens eine Schutzvorrichtung 28 aufweist, zu mindestens einem kabinenlosen Fahrzeug 3, welche während einer Fahrt die mindestens einen Schutzvorrichtung 28 aktivieren kann, einen Schritt S100, in welchem das mindestens eine Schutzbekleidungsstück 5 und das mindestens eine kabinenlose Fahrzeug 3 bei einer gegenseitigen statischen Zuordnung durch eine bidirektionale drahtlose Kommunikation DK entsprechende eindeutige Authentifizierungsinformationen austauschen und in einem Schritt S110 speichern. In einem Schritt S120 wird unter Verwendung der Authentifizierungsinformationen der statischen Zuordnung zumindest bei jedem Fahrtantritt mindestens eine zusätzliche Zustandsgröße des mindestens einen Schutzbekleidungsstücks 5 und/oder des verwendeten kabinenlosen Fahrzeugs 3 erfasst und im Schritt S130 in dem mindestens einen Schutzbekleidungsstück 5 und/oder dem verwendeten kabinenlosen Fahrzeug 3 ausgewertet. In einem Schritt S140 wird eine dynamische Zuordnung der mindestens einen Schutzvorrichtung 28 zu dem verwendeten kabinenlosen Fahrzeug 3 für die aktuelle Fahrt durchgeführt, wenn bei der Auswertung der mindestens einen zusätzlichen Zustandsgröße mindestens eine vorgegebene Bedingung erfüllt ist.

Dieses Verfahren kann beispielsweise in Software oder Hardware oder in einer Mischform aus Software und Hardware beispielsweise in den Auswerte- und Steuereinheiten 10, 20 der in Fig. 2 dargestellten Anordnung 1 zur Zuordnung von mindestens einem Schutzbekleidungsstück 5 zu mindestens einem kabinenlosen Fahrzeug 3 implementiert sein.

Wie aus Fig. 2 weiter ersichtlich ist, umfasst das dargestellte Ausführungsbeispiel der Anordnung 1, welche eingerichtet ist, das Verfahren 100 auszuführen, mindestens ein Schutzbekleidungsstück 5, 5A, 5B, 5C, welches mindestens eine Schutzvorrichtung 28 umfasst, und mindestens ein kabinenloses Fahrzeug 3, 3A, 3B, welches während einer Fahrt bei einer erkannten Unfallsituation die mindestens eine Schutzvorrichtung 28 des mindestens einen Schutzbekleidungsstücks 5, 5A, 5B, 5C aktivieren kann. Hierbei weist das mindestens eine kabinenlose Fahrzeug 3, 3A, 3B eine erste Kommunikationseinrichtung 14 auf, und das mindestens eine Schutzbekleidungsstück 5, 5A, 5B, 5C weist eine zweite Kommunikationseinrichtung 24 auf, wobei die erste Kommunikationseinrichtung 14 und die zweite Kommunikationseinrichtung 24 eine drahtlose Kommunikationsverbindung zwischen dem mindestens einen Schutzbekleidungsstück 5 und dem mindestens einen kabinenlosen Fahrzeug 3 aufbauen. Eine erste Auswerte- und Steuereinheit 10 des mindestens einen kabinenlosen Fahrzeugs 3, 3A, 3B und eine zweite Auswerte- und Steuereinheit 20 des mindestens einen Schutzbekleidungsstücks 5, 5A, 5B, 5C führen durch einen einmaligen Austausch und eine einmalige Speicherung von entsprechenden eindeutigen Authentifizierungsinformationen über eine bidirektionale drahtlose Kommunikation DK eine gegenseitige statische Zuordnung durch. Zudem erfassen und werten die erste Auswerte- und Steuereinheit 10 des mindestens einen kabinenlosen Fahrzeugs 3, 3A, 3B und/oder die zweite Auswerte- und Steuereinheit 20 des mindestens einen Schutzbekleidungsstücks 5, 5A, 5B, 5C zumindest vor jedem Fahrtantritt unter Verwendung der Authentifizierungsinformationen der statischen Zuordnung mindestens eine zusätzliche Zustandsgröße des mindestens einen Schutzbekleidungsstücks 5 des Aufsassen und/oder des verwendeten kabinenlosen Fahrzeugs 3 aus. Hierbei führen die erste Auswerte- und Steuereinheit 10 des verwendeten kabinenlosen Fahrzeugs 3 und/oder die zweite Auswerte- und Steuereinheit 20 des mindestens einen Schutzbekleidungsstücks 5 eine dynamische Zuordnung der mindestens einen Schutzvorrichtung 28 zu dem verwendeten kabinenlosen Fahrzeug 3 für die aktuelle Fahrt durch, wenn bei der Auswertung der mindestens einen zusätzlichen Zustandsgröße mindestens eine vorgegebene Bedingung erfüllt ist.

Wie aus Fig. 2 weiter ersichtlich ist, umfasst eine Schutzanordnung in einem Schutzbekleidungsstück 5, welche in Kombination mit einer Schutzanordnung in einem kabinenlosen Fahrzeug 3 das erfindungsgemäße Verfahren 100 ausführt, mindestens eine Schutzvorrichtung 28, welche während einer Fahrt von einem verwendeten kabinenlosen Fahrzeug 3 aktivierbar ist, eine Kommunikationseinrichtung 24, welche eine drahtlose Kommunikationsverbindung mit mindestens einem kabinenlosen Fahrzeug 3 aufbaut, und eine Auswerte- und Steuereinheit 20, welche über die Kommunikationseinrichtung 24 eine bidirektionale drahtlose Kommunikation DK mit dem mindestens einen kabinenlosen Fahrzeug 3 führt und in Kommunikation mit dem kabinenlosen Fahrzeug 3 einen einmaligen Austausch und eine einmalige Speicherung von entsprechenden eindeutigen Authentifizierungsinformationen und eine gegenseitige statische Zuordnung des mindestens einen kabinenlosen Fahrzeugs 3 durchführt. Die bekleidungsseitige Auswerte- und Steuereinheit 20 erfasst zumindest vor jedem Fahrtantritt unter Verwendung der Authentifizierungsinformationen der statischen Zuordnung mindestens eine zusätzliche Zustandsgröße des mindestens einen Schutzbekleidungsstücks 5 des Aufsassen und/oder des verwendeten kabinenlosen Fahrzeugs 3 und wertet diese in Kommunikation mit dem verwendeten kabinenlosen Fahrzeug 3 aus, wobei die bekleidungsseitigen Auswerte- und Steuereinheit 20 eine dynamische Zuordnung der mindestens einen Schutzvorrichtung 28 zu dem verwendeten kabinenlosen Fahrzeug 3 für die aktuelle Fahrt durchführt, wenn bei der Auswertung der mindestens einen zusätzlichen Zustandsgröße mindestens eine vorgegebene Bedingung erfüllt ist.

Wie aus Fig. 2 weiter ersichtlich ist, umfasst eine Schutzanordnung in einem kabinenlosen Fahrzeug 3, welche in Kombination mit einer Schutzanordnung in einem Schutzbekleidungsstück 5 das erfindungsgemäße Verfahren 100 ausführt, eine Kommunikationseinrichtung 14, welche eine drahtlose Kommunikationsverbindung mit mindestens einem Schutzbekleidungsstück 5 aufbaut, und eine Auswerte- und Steuereinheit 10, welche über die Kommunikationseinrichtung 14 eine bidirektionale drahtlose Kommunikation DK mit dem mindestens einen Schutzbekleidungsstück 5 führt und in Kommunikation mit dem mindestens einen Schutzbekleidungsstück 5 einen einmaligen Austausch und eine einmalige Speicherung von entsprechenden eindeutigen Authentifizierungsinformationen und eine gegenseitige statische Zuordnung des mindestens einen Schutzbekleidungsstücks 5 durchführt. Die fahrzeugseitige Auswerte- und Steuereinheit 10 erfasst zumindest vor jedem Fahrtantritt unter Verwendung der Authentifizierungsinformationen der statischen Zuordnung mindestens eine zusätzliche Zustandsgröße des mindestens einen Schutzbekleidungsstücks 5 des Aufsassen und/oder des verwendeten kabinenlosen Fahrzeugs 3 und wertet diese in Kommunikation mit dem mindestens einen Schutzbekleidungsstücks 5 des Aufsassen aus, wobei die fahrzeugseitige Auswerte- und Steuereinheit 10 eine dynamische Zuordnung der mindestens einen Schutzvorrichtung 28 zu dem verwendeten kabinenlosen Fahrzeug 3 für die aktuelle Fahrt durchführt, wenn bei der Auswertung der mindestens einen zusätzlichen Zustandsgröße mindestens eine vorgegebene Bedingung erfüllt ist.

In Fig. 2 sind zwei kabinenlose Fahrzeuge 3A, 3B und drei als Jacken ausgeführte Schutzbekleidungsstücke 5A, 5B, 5C dargestellt, welche jeweils eine als aufblasbarer Airbag ausgeführte Schutzvorrichtung 28 aufweisen. Hierbei sind im dargestellten Ausführungsbeispiel die Schutzbekleidungsstücke 5A, 5B, 5C sowohl dem ersten kabinenlosen Fahrzeug 3A als auch dem zweiten kabinenlosen Fahrzeug 3B statisch zugeordnet. Zusätzlich sind ein erstes Schutzbekleidungsstück 5A und ein zweites Schutzbekleidungsstück 5B für die aktuelle Fahrt dynamisch jeweils dem ersten kabinenlosen Fahrzeug 3A zugeordnet. Ein drittes Schutzbekleidungsstück 5C ist für die aktuelle Fahrt zusätzlich dynamisch dem zweiten kabinenlosen Fahrzeug 3B zugeordnet. Selbstverständlich sind auch noch andere statische und dynamische Zuordnungen der Schutzbekleidungsstücke 5A, 5B, 5C und der kabinenlosen Fahrzeuge 3A, 3B möglich.

Wie aus Fig. 2 weiter ersichtlich ist, weisen die Schutzbekleidungsstücke 5A, 5B, 5C jeweils eine nichtflüchtige Speichereinrichtung 22 auf, welche im dargestellten Ausführungsbeispiel in die jeweilige Auswerte- und Steuereinheit 20 integriert ist. Alternativ kann die nichtflüchtige Speichereinrichtung 22 ein externer Speicher sein. In den Speichereinrichtungen 22 der Schutzbekleidungsstücke 5A, 5B, 5C sind jeweils die ersten Authentifizierungsinformationen des ersten kabinenlosen Fahrzeugs 3A und des zweiten kabinenlosen Fahrzeugs 3B gespeichert. Die beiden kabinenlosen Fahrzeuge 3A, 3B weisen jeweils eine nichtflüchtige Speichereinrichtung 12 auf, in welchen jeweils die zweiten Authentifizierungsinformationen der drei Schutzbekleidungsstücke 5A, 5B, 5C gespeichert sind. Dadurch ist es möglich, dass alle drei Schutzbekleidungsstücke 5A, 5B, 5C sowohl dem ersten kabinenlosen Fahrzeug 3A als auch dem zweiten kabinenlosen Fahrzeug 3B für eine Fahrt dynamisch zugeordnet werden können. Wie aus Fig. 2 weiter ersichtlich ist, sind das erste Schutzbekleidungsstück 5A und das zweite Schutzbekleidungsstück 5B beispielhaft dem ersten kabinenlosen Fahrzeug 3A für eine aktuelle Fahrt dynamisch zugeordnet. Das dritte Schutzbekleidungsstück 5C ist dem zweiten kabinenlosen Fahrzeug 3B für eine aktuelle Fahrt dynamisch zugeordnet.

Wie aus Fig. 2 weiter ersichtlich ist, weisen im dargestellten Ausführungsbeispiel die Schutzbekleidungsstücke 5A, 5B, 5C und die kabinenlosen Fahrzeuge 3A, 3B jeweils mindestens eine Sensoreinrichtung 16, 26 auf, welche die mindestens eine zusätzliche Zustandsgröße erfassen. Im dargestellten Ausführungsbeispiel sind die Sensoreinrichtungen jeweils als inertiale Messeinheiten ausgeführt, welche jeweils eine räumliche Kombination mehrerer Inertialsensoren, wie Beschleunigungssensoren und Drehratensensoren umfassen.

Die kabinenlosen Fahrzeuge 3A, 3B weisen im dargestellten Ausführungsbeispiel jeweils eine Anzeigevorrichtung 18 auf, welche einen augenblicklichen Zustand der dynamischen Zuordnung zwischen dem verwendeten kabinenlosen Fahrzeugs 3 und dem korrespondierenden Schutzbekleidungsstück 5A, 5B, 5C des mindestens einen Aufsassen anzeigt.

Im dargestellten Ausführungsbeispiel werden bei der statischen Zuordnung im Schritt S110 erste Authentifizierungsinformationen der einzelnen Schutzbekleidungsstücke 5A, 5B, 5C in den beiden kabinenlosen Fahrzeugen 3A, 3B gespeichert. Zudem werden zweite Authentifizierungsinformationen der beiden kabinenlosen Fahrzeuge 3A, 3B jeweils in den drei Schutzbekleidungsstücken 5A, 5B, 5C gespeichert.

Zudem entspricht eine erste zusätzliche Zustandsgröße einer wirksamen ersten Beschleunigungsinformation der einzelnen Schutzbekleidungsstücke 5A, 5B, 5C, welche von der korrespondierenden bekleidungsseitigen Sensoreinrichtung 26 erfasst wird. Eine zweite Zustandsgröße entspricht einer wirksamen zweiten Beschleunigungsinformation des korrespondierenden kabinenlosen Fahrzeugs 3A, 3B, welche von der korrespondierenden fahrzeugseitigen Sensoreinrichtung 16 erfasst wird. Hierbei werden die einzelnen Schutzbekleidungsstücke 5A, 5B, 5C für die aktuelle Fahrt dem verwendeten kabinenlosen Fahrzeug 3A, 3B dynamisch zugeordnet, wenn die erfasste wirksame erste Beschleunigungsinformation des Schutzbekleidungsstücks 5A, 5A, 5B des Aufsassen und die erfasste wirksame zweite Beschleunigungsinformation des verwendeten kabinenlosen Fahrzeugs 3A, 3B innerhalb eines vorgegebenen Toleranzbereichs identisch sind. Als Beschleunigungsinformationen können beispielsweise lineare Beschleunigungen beim Anfahren oder Bremsen, als auch Drehraten in Kurvenfahrten des kabinenlosen Fahrzeugs 3A, 3B erfasst und ausgewertet werden. Da das verwendete kabinenlose Fahrzeug 3A, 3B und das korrespondierende Schutzbekleidungsstück 5A, 5B, 5C sowohl die gleiche lineare Beschleunigung beim Anfahren oder Bremsen, als auch die gleichen Drehraten in Kurvenfahrten erfahren, kann die dynamische Zuordnung dann anhand von Kreuzkorrelationen zwischen den totalen Linearbeschleunigungen, einem Drehraten-Vektor oder komponentenweise erfolgen. Ein korrespondierendes Koordinatensystem kann vorzugsweise einzeln oder gemeinsam horizontiert werden, um die Orientierung des Fahrzeugs 3A, 3B (z.B. Schräglage, Driftwinkel) und des Aufsassen bzw. des Schutzbekleidungsstücks 5A, 5B, 5C (Position auf dem Fahrzeug 3A, 3B) in Einklang zu bringen.

Bei einem alternativen nicht dargestellten Ausführungsbeispiel des Verfahrens 100 wird die mindestens eine zusätzliche Zustandsgröße zur Ermittlung eines Abstands zwischen dem mindestens einen Schutzbekleidungsstück 5A, 5B, 5C und dem verwendeten kabinenlosen Fahrzeugs 3A, 3B ausgewertet. Der Abstand zwischen dem Schutzbekleidungsstück 5A, 5B, 5C und dem verwendeten Fahrzeug 3A, 3B kann beispielsweise durch Auswertung der Übertragungsdauer bei der drahtlosen Kommunikation DK mit bestimmten kodierten Signalen abgeschätzt werden. Alternativ kann je nach Verfügbarkeit und Genauigkeit durch Auswertung der geografischen Positionen des Fahrzeugs und des Schutzbekleidungsstücks, welche über ein Satellitensystem erfasst werden können, der Abstand bestimmt werden. Hierbei kann das korrespondierende Schutzbekleidungsstück 5A, 5B, 5C für die aktuelle Fahrt dem verwendeten kabinenlosen Fahrzeug 3A, 3B zugeordnet werden, wenn der ermittelte Abstand innerhalb eines vorgegebenen Bereichs liegt.

Bei einem weiteren alternativen nicht dargestellten Ausführungsbeispiel des Verfahrens 100 entspricht die mindestens eine zusätzliche Zustandsgröße einer Authentifizierungsinformation, welche optisch sichtbar oder als auslesbarer Transponder an dem mindestens einen Schutzbekleidungsstück 5A, 5B, 5C angeordnet ist und von der fahrzeugseitigen Sensorvorrichtung 16 erfasst und ausgewertet wird. Bei diesem Ausführungsbeispiel umfasst die fahrzeugseitige Sensoreinrichtung 16 mindestens einen optischen Sensor, welcher die optischen Authentifizierungsinformationen am Schutzbekleidungsstück 5A, 5B, 5C erfasst und zur Auswertung an die fahrzeugseitige Auswerte- und Steuereinheit 10 weiterleitet. Der optische Sensor kann beispielsweise als Kamera ausgeführt sein und einen QR-Code oder eine Infrarot-Diode an dem Schutzbekleidungsstück 5A, 5B, 5C erfassen. Alternativ umfasst die fahrzeugseitige Sensoreinrichtung 16 ein Lesegerät zum Auslesen der Authentifizierungsinformation aus dem Transponder des Schutzbekleidungsstücks 5A, 5B, 5C. Hierbei wird das korrespondierende Schutzbekleidungsstück 5A, 5B, 5C für die aktuelle Fahrt dem verwendeten kabinenlosen Fahrzeug 3A, 3B dynamisch zugeordnet, wenn die erfasste oder ausgelesene Authentifizierungsinformation einer Authentifizierungsinformation eines statisch dem verwendeten kabinenlosen Fahrzeugs 3A, 3B zugeordneten Schutzbekleidungsstücks 5 entspricht.

Bei einem weiteren alternativen nicht dargestellten Ausführungsbeispiel des Verfahrens 100 entspricht die mindestens eine zusätzliche Zustandsgröße einem Motorgeräusch, welches durch das verwendete kabinenlose Fahrzeug 3A, 3B erzeugt wird und von einer bekleidungsseitigen akustischen Sensorvorrichtung 26 erfasst und ausgewertet wird. Hierzu kann die bekleidungsseitige Sensoreinrichtung 26 ein akustisches Sensorelement, wie beispielsweise ein Mikrofon, umfassen, welches den Zündzeitpunkt des verwendeten Fahrzeugs 3A, 3B erfassen kann. Die Motorgeräusche können dann beispielsweise durch eine Frequenzanalyse mittels Fouriertransformation ausgewertet werden. Mittels eines Abgleichs zu den Motorzündzeiten der Fahrzeuge 3A, 3B in Reichweite des Mikrofons und eine Laufzeitbestimmung des Schalls ist so eine Abstandsberechnung möglich. Hierzu wird bei nicht zeitsynchronisierten Endgeräten eine geringe und relativ konstante Übermittlungszeit der drahtlosen Kommunikation berücksichtigt. Hierbei wird das korrespondierende Schutzbekleidungsstück 5A, 5B, 5C für die aktuelle Fahrt dem verwendeten kabinenlosen Fahrzeug 3A, 3B dynamisch zugeordnet, wenn die erfassten und ausgewerteten Motorgeräusche mit Zustandsdaten des Motors des verwendeten kabinenlosen Fahrzeugs 3A, 3B korrespondieren.

In Abhängigkeit von den eingesetzten Sensoreinrichtungen 16, 26 wird die automatische dynamische Zuordnung des mindestens einen Schutzbekleidungsstücks 5A, 5B, 5C eines Aufsassen zu dem verwendeten Fahrzeug 3A, 3B direkt nach einem Aktivieren des verwendeten Fahrzeugs 3 und vor Fahrtbeginn oder innerhalb eines Zeitfensters nach Fahrtbeginn durchgeführt. Zudem wird im dargestellten Ausführungsbeispiel die dynamische Zuordnung des korrespondierenden Schutzbekleidungsstücks 5A, 5B, 5C eines Aufsassen zu dem verwendeten Fahrzeug 3A, 3B periodisch oder ereignisgesteuert während der Fahrt überprüft. Dadurch kann dem Fahrer eine gefundene dynamische Zuordnung am Fahrzeug signalisiert werden, so dass er die Möglichkeit hat korrigierend einzugreifen. Zudem kann der Fahrer durch die periodische Überprüfung der dynamischen Zuordnung währen der Fahrt erkennen, ob das korrespondierende Schutzbekleidungsstück 5A, 5B, 5C und dessen Funkkommunikation immer noch funktionieren. Zudem kann der Fahrer bei einer Störung durch die Anzeigeeinrichtung 18 optisch und/oder akustisch gewarnt werden.

Die dynamische Zuordnung des korrespondierenden Schutzbekleidungsstücks 5A, 5B, 5C des mindestens einen Aufsassen zu dem verwendeten Fahrzeug 3A, 3B wird nach Fahrtende wieder aufgehoben. Das Fahrtende wird im dargestellten Ausführungsbeispiel nach einem Fahrzeugstopp, welcher durch eine Ausklappen eines Ständers erkannt wird, oder nach einem Deaktivieren des verwendeten Fahrzeugs 3A, 3B erkannt.

## Patentansprüche

1. Verfahren (100) zur Zuordnung von mindestens einem Schutzbekleidungsstück (5) zu mindestens einem kabinenlosen Fahrzeug (3), wobei das mindestens eine Schutzbekleidungsstück (5) mindestens eine Schutzvorrichtung (28) aufweist, welche während einer Fahrt von dem verwendeten kabinenlosen Fahrzeug (3) aktivierbar ist, wobei das mindestens eine Schutzbekleidungsstück (5) und das mindestens eine kabinenlose Fahrzeug (3) bei einer gegenseitigen statischen Zuordnung durch eine bidirektionale drahtlose Kommunikation (DK) entsprechende eindeutige Authentifizierungsinformationen austauschen und speichern, wobei unter Verwendung der Authentifizierungsinformationen der statischen Zuordnung zumindest bei jedem Fahrtantritt mindestens eine zusätzliche Zustandsgröße des mindestens einen Schutzbekleidungsstücks (5) und/oder des verwendeten kabinenlosen Fahrzeugs (3) erfasst und in dem mindestens einen Schutzbekleidungsstück (5) und/oder dem verwendeten kabinenlosen Fahrzeug (3) ausgewertet wird, und wobei eine dynamische Zuordnung der mindestens einen Schutzvorrichtung (28) zu dem verwendeten kabinenlosen Fahrzeug (3) für die aktuelle Fahrt durchgeführt wird, wenn bei der Auswertung der mindestens einen zusätzlichen Zustandsgröße mindestens eine vorgegebene Bedingung erfüllt ist.

2. Verfahren (100) nach Anspruch 1, **dadurch gekennzeichnet, dass** bei der statischen Zuordnung eine erste Authentifizierungsinformation des mindestens einen Schutzbekleidungsstücks (5) in dem mindestens einen Fahrzeug (3) und eine zweite Authentifizierungsinformation des mindestens einen Fahrzeugs (3) in dem mindestens einen Schutzbekleidungsstück (5) gespeichert wird.

3. Verfahren (100) nach Anspruch 1 oder 2, **dadurch gekennzeichnet, dass** die mindestens eine zusätzliche Zustandsgröße zur Ermittlung eines Abstands zwischen dem mindestens einen Schutzbekleidungsstück (5) und dem verwendeten kabinenlosen Fahrzeugs (3) ausgewertet wird.

4. Verfahren (100) nach Anspruch 3, **dadurch gekennzeichnet, dass** das mindestens eine Schutzbekleidungsstück (5) für die aktuelle Fahrt dem verwendeten kabinenlosen Fahrzeug (3) zugeordnet wird, wenn der ermittelte Abstand innerhalb eines vorgegebenen Bereichs liegt.

5. Verfahren (100) nach Anspruch 1 oder 2, **dadurch gekennzeichnet, dass** eine erste zusätzliche Zustandsgröße einer wirksamen ersten Beschleunigungsinformation des mindestens einen Schutzbekleidungsstücks (5) entspricht und eine zweite Zustandsgröße einer wirksamen zweiten Beschleunigungsinformation des korrespondierenden kabinenlosen Fahrzeugs (3) entspricht.

6. Verfahren (100) nach Anspruch 5, **dadurch gekennzeichnet, dass** das mindestens eine Schutzbekleidungsstück (5) für die aktuelle Fahrt dem korrespondierenden kabinenlosen Fahrzeug (3) dynamisch zugeordnet wird, wenn die erfasste wirksame erste Beschleunigungsinformation des mindestens einen Schutzbekleidungsstücks (5) und die erfasste wirksame zweite Beschleunigungsinformation des korrespondierenden kabinenlosen Fahrzeugs (3) innerhalb eines vorgegebenen Toleranzbereichs identisch sind.

7. Verfahren (100) nach Anspruch 1 oder 2, **dadurch gekennzeichnet, dass** die mindestens eine zusätzliche Zustandsgröße einer Authentifizierungsinformation entspricht, welche optisch sichtbar oder als auslesbarer Transponder an dem mindestens einen Schutzbekleidungsstück (5) angeordnet ist und von einer fahrzeugseitigen Sensorvorrichtung (16) erfasst und ausgewertet wird, wobei das mindestens eine Schutzbekleidungsstück (5) für die aktuelle Fahrt dem korrespondierenden kabinenlosen Fahrzeug (3) dynamisch zugeordnet wird, wenn die erfasste oder ausgelesene Authentifizierungsinformation einer Authentifizierungsinformation eines statisch dem verwendeten kabinenlosen Fahrzeugs (3) zugeordneten Schutzbekleidungsstücks (5) entspricht.

8. Verfahren (100) nach Anspruch 1 oder 2, **dadurch gekennzeichnet, dass** die mindestens eine zusätzliche Zustandsgröße einem Motorgeräusch entspricht, welches durch das verwendete kabinenlose Fahrzeug (3) erzeugt wird und von einer bekleidungsseitigen akustischen Sensorvorrichtung (26) erfasst und ausgewertet wird, wobei das mindestens eine Schutzbekleidungsstück (5) für die aktuelle Fahrt dem korrespondierenden kabinenlosen Fahrzeug (3) dynamisch zugeordnet wird, wenn die erfassten und ausgewerteten Motorgeräusche mit Zustandsdaten des Motors des verwendeten kabinenlosen Fahrzeugs (3) korrespondieren.

9. Verfahren (100) nach einem der Ansprüche 1 bis 8, **dadurch gekennzeichnet, dass** die automatische dynamische Zuordnung des mindestens einen Schutzbekleidungsstück (5) mindestens eines Aufsassen zu dem verwendeten Fahrzeug (3) direkt nach einem Aktivieren des verwendeten Fahrzeugs (3) und vor Fahrtbeginn oder innerhalb eines Zeitfensters nach Fahrtbeginn durchgeführt wird.

10. Verfahren (100) nach Anspruch 9, **dadurch gekennzeichnet, dass** die dynamische Zuordnung des mindestens einen Schutzbekleidungsstück (5) des mindestens einen Aufsassen zu dem verwendeten Fahrzeug (3) periodisch oder ereignisgesteuert während der Fahrt überprüft wird.

11. Verfahren (100) nach einem der Ansprüche 1 bis 10, **dadurch gekennzeichnet, dass** die dynamische Zuordnung des mindestens einen Schutzbekleidungsstück (5) des mindestens einen Aufsassen zu dem verwendeten Fahrzeug (3) nach Fahrtende wieder aufgehoben wird.

12. Anordnung (1) mit mindestens einem Schutzbekleidungsstück (5) und mindestens einem kabinenlosen Fahrzeug (3), welche eingerichtet ist, das Verfahren (100) nach einem der Ansprüche 1 bis 11 auszuführen, wobei das mindestens eine Schutzbekleidungsstück (5) mindestens eine Schutzvorrichtung (28) aufweist, welche während einer Fahrt von einem verwendeten kabinenlosen Fahrzeug (3) aktivierbar ist, wobei das mindestens eine kabinenlose Fahrzeug (3) eine erste Kommunikationseinrichtung (14) aufweist und das mindestens eine Schutzbekleidungsstück (5) eine zweite Kommunikationseinrichtung (24) aufweist, wobei die erste Kommunikationseinrichtung (14) und die zweite Kommunikationseinrichtung (24) ausgeführt sind, eine drahtlose Kommunikationsverbindung zwischen dem mindestens einen Schutzbekleidungsstück (5) und dem mindestens einen kabinenlosen Fahrzeug (3) aufzubauen, wobei eine erste Auswerte- und Steuereinheit (10) des mindestens einen kabinenlosen Fahrzeugs (3) und eine zweite Auswerte- und Steuereinheit (20) des mindestens einen Schutzbekleidungsstücks (5) ausgeführt sind, durch einen einmaligen Austausch und eine einmalige Speicherung von entsprechenden eindeutigen Authentifizierungsinformationen über eine bidirektionale drahtlose Kommunikation (DK) eine gegenseitige statische Zuordnung durchzuführen, wobei die erste Auswerte- und Steuereinheit (10) des mindestens einen kabinenlosen Fahrzeugs (3) und/oder die zweite Auswerte- und Steuereinheit (20) des mindestens einen Schutzbekleidungsstück (5) weiter ausgeführt sind, zumindest vor jedem Fahrtantritt unter Verwendung der Authentifizierungsinformationen der statischen Zuordnung mindestens eine zusätzliche Zustandsgröße des mindestens einen Schutzbekleidungsstücks (5) des Aufsassen und/oder des verwendeten kabinenlosen Fahrzeugs (3) zu erfassen und auszuwerten, wobei die erste Auswerte- und Steuereinheit (10) des verwendeten kabinenlosen Fahrzeugs (3) und/oder die zweite Auswerte- und Steuereinheit (20) des mindestens einen Schutzbekleidungsstücks (5) weiter ausgeführt sind, eine dynamische Zuordnung der mindestens einen Schutzvorrichtung (28) zu dem verwendeten kabinenlosen Fahrzeug (3) für die aktuelle Fahrt durchzuführen, wenn bei der Auswertung der mindestens einen zusätzlichen Zustandsgröße mindestens eine vorgegebene Bedingung erfüllt ist.

13. Anordnung (1) nach Anspruch 12, **dadurch gekennzeichnet, dass** das mindestens eine Schutzbekleidungsstück (5) mindestens eine nichtflüchtige Speichereinrichtung (22) aufweist, welche ausgeführt ist, eine erste Authentifizierungsinformation von mindestens einem Fahrzeug (3) zu speichern, wobei das mindestens eine Fahrzeug (3) mindestens eine nichtflüchtige Speichereinrichtung (12) aufweist, welche ausgeführt ist, eine zweite Authentifizierungsinformation von mindestens einem Schutzbekleidungsstück (5) zu speichern.

14. Anordnung (1) nach Anspruch 12 oder 13, **dadurch gekennzeichnet, dass** das mindestens eine Schutzbekleidungsstück (5) und/oder das mindestens eine kabinenlose Fahrzeugs (3) mindestens eine Sensoreinrichtung (16, 26) aufweisen, welche ausgeführt ist, die mindestens eine zusätzliche Zustandsgröße zu erfassen.

15. Anordnung (1) nach einem der Ansprüche 12 bis 14, **dadurch gekennzeichnet, dass** das mindestens eine kabinenlose Fahrzeug (3) mindestens eine Anzeigevorrichtung (18) aufweist, welche einen augenblicklichen Zustand der dynamischen Zuordnung zwischen dem verwendeten kabinenlosen Fahrzeugs (3) und dem mindestens einen Schutzbekleidungsstück (5) des Aufsassen anzeigt.

16. Schutzanordnung in einem Schutzbekleidungsstück (5), welche eingerichtet ist, in Kombination mit einer Schutzanordnung in einem kabinenlosen Fahrzeug (3) das Verfahren (100) nach einem der Ansprüche 1 bis 11 auszuführen, mit mindestens einer Schutzvorrichtung (28), welche während einer Fahrt von einem verwendeten kabinenlosen Fahrzeug (3) aktivierbar ist, einer Kommunikationseinrichtung (24), welche ausgeführt ist, eine drahtlose Kommunikationsverbindung mit mindestens einem kabinenlosen Fahrzeug (3) aufzubauen, und mit einer Auswerte- und Steuereinheit (20), welche ausgeführt ist, über die Kommunikationseinrichtung (24) eine bidirektionale drahtlose Kommunikation (DK) mit dem mindestens einen kabinenlosen Fahrzeug (3) zu führen und in Kommunikation mit dem kabinenlosen Fahrzeug (3) einen einmaligen Austausch und eine einmalige Speicherung von entsprechenden eindeutigen Authentifizierungsinformationen und eine gegenseitige statische Zuordnung des mindestens einen kabinenlosen Fahrzeugs (3) durchzuführen, wobei die bekleidungsseitige Auswerte- und Steuereinheit (20) weiter ausgeführt ist, zumindest vor jedem Fahrtantritt unter Verwendung der Authentifizierungsinformationen der statischen Zuordnung mindestens eine zusätzliche Zustandsgröße des mindestens einen Schutzbekleidungsstücks (5) des Aufsassen und/oder des verwendeten kabinenlosen Fahrzeugs (3) zu erfassen und in Kommunikation mit dem verwendeten kabinenlosen Fahrzeug (3) auszuwerten, wobei die bekleidungsseitigen Auswerte- und Steuereinheit (20) weiter ausgeführt ist, eine dynamische Zuordnung der mindestens einen Schutzvorrichtung (28) zu dem verwendeten kabinenlosen Fahrzeug (3) für die aktuelle Fahrt durchzuführen, wenn bei der Auswertung der mindestens einen zusätzlichen Zustandsgröße mindestens eine vorgegebene Bedingung erfüllt ist.

17. Schutzanordnung in einem kabinenlosen Fahrzeug (3), welche eingerichtet ist, in Kombination mit einer Schutzanordnung in einem Schutzbekleidungsstück (5) das Verfahren (100) nach einem der Ansprüche 1 bis 11 auszuführen, mit einer Kommunikationseinrichtung (14), welche ausgeführt ist, eine drahtlose Kommunikationsverbindung mit mindestens einem Schutzbekleidungsstück (5) aufzubauen, und einer Auswerte- und Steuereinheit (10), welche ausgeführt ist, über die Kommunikationseinrichtung (14) eine bidirektionale drahtlose Kommunikation (DK) mit dem mindestens einen Schutzbekleidungsstück (5) zu führen und in Kommunikation mit dem mindestens einen Schutzbekleidungsstück (5) einen einmaligen Austausch und eine einmalige Speicherung von entsprechenden eindeutigen Authentifizierungsinformationen und eine gegenseitige statische Zuordnung des mindestens einen Schutzbekleidungsstücks (5) durchzuführen, wobei die fahrzeugseitige Auswerte- und Steuereinheit (10) weiter ausgeführt ist, zumindest vor jedem Fahrtantritt unter Verwendung der Authentifizierungsinformationen der statischen Zuordnung mindestens eine zusätzliche Zustandsgröße des mindestens einen Schutzbekleidungsstücks (5) des Aufsassen und/oder des verwendeten kabinenlosen Fahrzeugs (3) zu erfassen und in Kommunikation mit dem mindestens einen Schutzbekleidungsstücks (5) des Aufsassen auszuwerten, wobei die fahrzeugseitige Auswerte- und Steuereinheit (10) weiter ausgeführt ist, eine dynamische Zuordnung der mindestens einen Schutzvorrichtung (28) zu dem verwendeten kabinenlosen Fahrzeug (3) für die aktuelle Fahrt durchzuführen, wenn bei der Auswertung der mindestens einen zusätzlichen Zustandsgröße mindestens eine vorgegebene Bedingung erfüllt ist.

## Claims

1. Method (100) for assigning at least one protective garment (5) to at least one cabin-less vehicle (3), wherein the at least one protective garment (5) has at least one protective apparatus (28) which can be activated during a journey by the cabin-less vehicle (3) used, wherein, in the case of a mutual static assignment, the at least one protective garment (5) and the at least one cabin-less vehicle (3) exchange and store corresponding unique authentication information by way of bidirectional wireless communication (DK), wherein at least one additional state variable of the at least one protective garment (5) and/or of the cabin-less vehicle (3) used is captured at least at the start of each journey using the authentication information from the static assignment and is evaluated in the at least one protective garment (5) and/or the cabin-less vehicle (3) used, and wherein the at least one protective apparatus (28) is dynamically assigned to the cabin-less vehicle (3) used for the current journey if at least one predefined condition is met when evaluating the at least one additional state variable.

2. Method (100) according to Claim 1, **characterized in that**, in the case of the static assignment, first authentication information relating to the at least one protective garment (5) is stored in the at least one vehicle (3) and second authentication information relating to the at least one vehicle (3) is stored in the at least one protective garment (5).

3. Method (100) according to Claim 1 or 2, **characterized in that** the at least one additional state variable is evaluated in order to determine a distance between the at least one protective garment (5) and the cabin-less vehicle (3) used.

4. Method (100) according to Claim 3, **characterized in that** the at least one protective garment (5) for the current journey is assigned to the cabin-less vehicle (3) used if the determined distance is within a predefined range.

5. Method (100) according to Claim 1 or 2, **characterized in that** a first additional state variable corresponds to effective first acceleration information relating to the at least one protective garment (5) and a second state variable corresponds to effective second acceleration information relating to the corresponding cabin-less vehicle (3).

6. Method (100) according to Claim 5, **characterized in that** the at least one protective garment (5) for the current journey is dynamically assigned to the corresponding cabin-less vehicle (3) if the captured effective first acceleration information relating to the at least one protective garment (5) and the captured effective second acceleration information relating to the corresponding cabin-less vehicle (3) are identical within a predefined tolerance range.

7. Method (100) according to Claim 1 or 2, **characterized in that** the at least one additional state variable corresponds to authentication information which is optically visible or arranged as a readable transponder on the at least one protective garment (5) and is captured and evaluated by an on-board sensor apparatus (16), wherein the at least one protective garment (5) for the current journey is dynamically assigned to the corresponding cabin-less vehicle (3) if the captured or read authentication information corresponds to authentication information relating to a protective garment (5) statically assigned to the cabin-less vehicle (3) used.

8. Method (100) according to Claim 1 or 2, **characterized in that** the at least one additional state variable corresponds to an engine noise which is generated by the cabin-less vehicle (3) used and is captured and evaluated by an acoustic sensor apparatus (26) on the garment, wherein the at least one protective garment (5) for the current journey is dynamically assigned to the corresponding cabin-less vehicle (3) if the captured and evaluated engine noises correspond to state data relating to the engine of the cabin-less vehicle (3) used.

9. Method (100) according to one of Claims 1 to 8, **characterized in that** the at least one protective garment (5) of at least one occupant is automatically dynamically assigned to the vehicle (3) used directly after the vehicle (3) used has been activated and before the start of a journey or within a time window after the start of a journey.

10. Method (100) according to Claim 9, **characterized in that** the dynamic assignment of the at least one protective garment (5) of the at least one occupant to the vehicle (3) used is checked periodically or in an event-controlled manner during the journey.

11. Method (100) according to one of Claims 1 to 10, **characterized in that** the dynamic assignment of the at least one protective garment (5) of the at least one occupant to the vehicle (3) used is cancelled again after the end of a journey.

12. Arrangement (1) comprising at least one protective garment (5) and at least one cabin-less vehicle (3), which is configured to carry out the method (100) according to one of Claims 1 to 11, wherein the at least one protective garment (5) has at least one protective apparatus (28) which can be activated during a journey by a cabin-less vehicle (3) used, wherein the at least one cabin-less vehicle (3) has a first communication device (14) and the at least one protective garment (5) has a second communication device (24), wherein the first communication device (14) and the second communication device (24) are designed to establish a wireless communication link between the at least one protective garment (5) and the at least one cabin-less vehicle (3), wherein a first evaluation and control unit (10) of the at least one cabin-less vehicle (3) and a second evaluation and control unit (20) of the at least one protective garment (5) are designed to perform a mutual static assignment by way of one-time exchange and one-time storage of corresponding unique authentication information via bidirectional wireless communication (DK), wherein the first evaluation and control unit (10) of the at least one cabin-less vehicle (3) and/or the second evaluation and control unit (20) of the at least one protective garment (5) is/are also designed to capture and evaluate at least one additional state variable of the at least one protective garment (5) of the occupant and/or of the cabin-less vehicle (3) used at least before the start of each journey using the authentication information from the static assignment, wherein the first evaluation and control unit (10) of the cabin-less vehicle (3) used and/or the second evaluation and control unit (20) of the at least one protective garment (5) is/are also designed to dynamically assign the at least one protective apparatus (28) to the cabin-less vehicle (3) used for the current journey if at least one predefined condition is met when evaluating the at least one additional state variable.

13. Arrangement (1) according to Claim 12, **characterized in that** the at least one protective garment (5) has at least one non-volatile memory device (22) which is designed to store first authentication information relating to at least one vehicle (3), wherein the at least one vehicle (3) has at least one non-volatile memory device (12) which is designed to store second authentication information relating to at least one protective garment (5).

14. Arrangement (1) according to Claim 12 or 13, **characterized in that** the at least one protective garment (5) and/or the at least one cabin-less vehicle (3) has/have at least one sensor device (16, 26) which is designed to capture the at least one additional state variable.

15. Arrangement (1) according to one of Claims 12 to 14, **characterized in that** the at least one cabin-less vehicle (3) has at least one display apparatus (18) which displays an instantaneous state of the dynamic assignment between the cabin-less vehicle (3) used and the at least one protective garment (5) of the occupant.

16. Protective arrangement in a protective garment (5), which is configured, in combination with a protective arrangement in a cabin-less vehicle (3), to carry out the method (100) according to one of Claims 1 to 11, having at least one protective apparatus (28) which can be activated during a journey by a cabin-less vehicle (3) used, having a communication device (24) which is designed to establish a wireless communication link to at least one cabin-less vehicle (3), and having an evaluation and control unit (20) which is designed to carry out bidirectional wireless communication (DK) with the at least one cabin-less vehicle (3) via the communication device (24) and, in communication with the cabin-less vehicle (3), to carry out a one-time exchange and a one-time storage of corresponding unique authentication information and a mutual static assignment of the at least one cabin-less vehicle (3), wherein the evaluation and control unit (20) on the garment is also designed to capture at least one additional state variable of the at least one protective garment (5) of the occupant and/or the cabin-less vehicle (3) used at least before the start of each journey using the authentication information from the static assignment and evaluate it in communication with the cabin-less vehicle (3) used, wherein the evaluation and control unit (20) on the garment is also designed to dynamically assign the at least one protective apparatus (28) to the cabin-less vehicle (3) used for the current journey if at least one predefined condition is met when evaluating the at least one additional state variable.

17. Protective arrangement in a cabin-less vehicle (3), which is configured, in combination with a protective arrangement in a protective garment (5), to carry out the method (100) according to one of Claims 1 to 11, having a communication device (14) which is designed to establish a wireless communication link to at least one protective garment (5), and having an evaluation and control unit (10) which is designed to carry out bidirectional wireless communication (DK) with the at least one protective garment (5) via the communication device (14) and, in communication with the at least one protective garment (5), to carry out a one-time exchange and a one-time storage of corresponding unique authentication information and a mutual static assignment of the at least one protective garment (5), wherein the on-board evaluation and control unit (10) is also designed to capture at least one additional state variable of the at least one protective garment (5) of the occupant and/or the cabin-less vehicle (3) used at least before the start of each journey using the authentication information from the static assignment and evaluate it in communication with the at least one protective garment (5) of the occupant, wherein the on-board evaluation and control unit (10) is also designed to dynamically assign the at least one protective apparatus (28) to the cabin-less vehicle (3) used for the current journey if at least one predefined condition is met when evaluating the at least one additional state variable.

## Revendications

1. Procédé (100) pour associer au moins un vêtement de protection (5) à au moins un véhicule sans cabine (3), ledit au moins un vêtement de protection (5) comportant au moins un dispositif de protection (28) apte à être activé pendant un trajet du véhicule sans cabine (3) utilisé, ledit au moins un vêtement de protection (5) et ledit au moins un véhicule sans cabine (3) échangeant par le biais d'une communication sans fil bidirectionnelle (DK) et enregistrant des informations d'authentification univoques correspondantes lors d'une association statique réciproque, au moins une grandeur d'état supplémentaire dudit au moins un vêtement de protection (5) et/ou du véhicule sans cabine (3) utilisé étant détectée au moins à chaque début de trajet au moyen des informations d'authentification de l'association statique et évaluée dans ledit au moins un vêtement de protection (5) et/ou le véhicule sans cabine utilisé (3), et une association dynamique dudit au moins un dispositif de protection (28) au véhicule sans cabine utilisé (3) étant effectuée pour le trajet en cours si, lors de l'évaluation de ladite au moins une grandeur d'état supplémentaire, au moins une condition prédéfinie est remplie.

2. Procédé (100) selon la revendication 1, **caractérisé en ce que**, lors de l'association statique, une première information d'authentification dudit au moins un vêtement de protection (5) est enregistrée dans ledit au moins un véhicule (3) et une deuxième information d'authentification dudit au moins un véhicule (3) est enregistrée dans ledit au moins un vêtement de protection (5).

3. Procédé (100) selon la revendication 1 ou la revendication 2, **caractérisé en ce que** ladite au moins une grandeur d'état supplémentaire est évaluée pour déterminer une distance entre ledit au moins un vêtement de protection (5) et le véhicule sans cabine (3) utilisé.

4. Procédé (100) selon la revendication 3, **caractérisé en ce que** ledit au moins un vêtement de protection (5) est associé pour le trajet actuel au véhicule sans cabine (3) utilisé, lorsque la distance déterminée se situe dans une plage prédéfinie.

5. Procédé (100) selon la revendication 1 ou la revendication 2, **caractérisé en ce qu'**une première grandeur d'état supplémentaire correspond à une première information d'accélération effective dudit au moins un vêtement de protection (5) et une deuxième grandeur d'état correspond à une deuxième information d'accélération effective du véhicule sans cabine (3) correspondant.

6. Procédé (100) selon la revendication 5, **caractérisé en ce que** ledit au moins un vêtement de protection (5) est associé de manière dynamique au véhicule sans cabine correspondant (3) pour le trajet en cours lorsque la première information d'accélération effective détectée dudit au moins un vêtement de protection (5) et la deuxième information d'accélération effective détectée du véhicule sans cabine correspondant (3) sont identiques dans une plage de tolérance prédéfinie.

7. Procédé (100) selon la revendication 1 ou la revendication 2, **caractérisé en ce que** ladite au moins une grandeur d'état supplémentaire correspond à une information d'authentification qui est agencée de manière visible optiquement ou sous forme de transpondeur lisible sur ledit au moins un vêtement de protection (5) et qui est détectée et évaluée par un dispositif capteur (16) côté véhicule, ledit au moins un vêtement de protection (5) étant associé de manière dynamique au véhicule sans cabine (3) correspondant pour le trajet en cours lorsque l'information d'authentification détectée ou lue correspond à une information d'authentification d'un vêtement de protection (5) associé de manière statique au véhicule sans cabine (3) utilisé.

8. Procédé (100) selon la revendication 1 ou la revendication 2, **caractérisé en ce que** ladite au moins une grandeur d'état supplémentaire correspond à un bruit de moteur qui est généré par le véhicule sans cabine (3) utilisé et qui est détecté et évalué par un dispositif de détection acoustique (26) côté vêtement, ledit au moins un vêtement de protection (5) étant associé de manière dynamique au véhicule sans cabine (3) correspondant pour le trajet en cours lorsque les bruits de moteur détectés et évalués correspondent aux données d'état du moteur du véhicule sans cabine (3) utilisé.

9. Procédé (100) selon l'une des revendications 1 à 8, **caractérisé en ce que** l'association dynamique automatique au véhicule utilisé (3) dudit au moins un vêtement de protection (5) d'au moins un passager est effectuée directement après l'activation du véhicule utilisé (3) et avant le début du trajet ou dans un intervalle de temps suivant le début du trajet.

10. Procédé (100) selon la revendication 9, **caractérisé en ce que** l'association dynamique au véhicule utilisé (3) dudit au moins un vêtement de protection (5) dudit au moins un passager est vérifiée périodiquement ou en fonction d'un événement pendant le trajet.

11. Procédé (100) selon l'une des revendications 1 à 10, **caractérisé en ce que** l'association dynamique au véhicule utilisé (3) dudit au moins un vêtement de protection (5) dudit au moins un passager est de nouveau annulée après la fin du trajet.

12. Agencement (1) comprenant au moins un vêtement de protection (5) et au moins un véhicule sans cabine (3), qui est conçu pour mettre en œuvre le procédé (100) selon l'une des revendications 1 à 11, ledit au moins un vêtement de protection (5) comportant au moins un dispositif de protection (28) qui est apte à être activé pendant un trajet d'un véhicule sans cabine (3) utilisé, ledit au moins un véhicule sans cabine (3) comprenant un premier dispositif de communication (14) et ledit au moins un vêtement de protection (5) comprenant un deuxième dispositif de communication (24), le premier dispositif de communication (14) et le deuxième dispositif de communication (24) étant conçus pour établir une connexion de communication sans fil entre ledit au moins un vêtement de protection (5) et ledit au moins un véhicule sans cabine (3), une première unité d'évaluation et de commande (10) dudit au moins un véhicule sans cabine (3) et une deuxième unité d'évaluation et de commande (20) dudit au moins un vêtement de protection (5) étant conçues pour effectuer une association statique réciproque par un échange unique et un enregistrement unique d'informations d'authentification univoques correspondantes via une communication sans fil bidirectionnelle (DK), la première unité d'évaluation et de commande (10) dudit au moins un véhicule sans cabine (3) et/ou la deuxième unité d'évaluation et de commande (20) dudit au moins un vêtement de protection (5) étant en outre conçues pour, au moins avant chaque début de trajet, en utilisant les informations d'authentification de l'association statique, enregistrer et évaluer au moins une grandeur d'état supplémentaire dudit au moins un vêtement de protection (5) du passager et/ou du véhicule sans cabine (3) utilisé, la première unité d'évaluation et de commande (10) du véhicule sans cabine utilisé (3) et/ou la deuxième unité d'évaluation et de commande (20) dudit au moins un vêtement de protection (5) étant en outre conçues pour effectuer pour le trajet en cours une association dynamique dudit au moins un dispositif de protection (28) avec le véhicule sans cabine (3) utilisé , si au moins une condition prédéfinie est remplie lors de l'évaluation de ladite au moins une grandeur d'état supplémentaire.

13. Agencement (1) selon la revendication 12, **caractérisé en ce que** ledit au moins un vêtement de protection (5) comporte au moins un dispositif de mémoire non volatile (22) qui est conçu pour enregistrer une première information d'authentification d'au moins un véhicule (3), ledit au moins un véhicule (3) comportant au moins un dispositif de mémoire non volatile (12) qui est conçu pour enregistrer une deuxième information d'authentification provenant d'au moins un vêtement de protection (5).

14. Agencement (1) selon la revendication 12 ou la revendication 13, **caractérisé en ce que** ledit au moins un vêtement de protection (5) et/ou ledit au moins un véhicule sans cabine (3) comportent au moins un dispositif capteur (16, 26) qui est conçu pour détecter ladite au moins une grandeur d'état supplémentaire.

15. Agencement (1) selon l'une des revendications 12 à 14, **caractérisé en ce que** ledit au moins un véhicule sans cabine (3) comprend au moins un dispositif d'affichage (18) qui affiche un état instantané de l'association dynamique entre le véhicule sans cabine (3) utilisé et ledit au moins un vêtement de protection (5) du passager.

16. Agencement de protection dans un vêtement de protection (5), qui est conçu pour mettre en œuvre, en combinaison avec un agencement de protection dans un véhicule sans cabine (3), le procédé (100) selon l'une des revendications 1 à 11, comprenant au moins un dispositif de protection (28), qui est apte à être activé pendant un trajet d'un véhicule sans cabine utilisé (3), un dispositif de communication (24), qui est conçu pour établir une connexion de communication sans fil avec au moins un véhicule sans cabine (3), et une unité d'évaluation et de commande (20), qui est conçue pour établir, via le dispositif de communication (24), une communication sans fil bidirectionnelle (DK) avec ledit au moins un véhicule sans cabine (3) et, en communication avec le véhicule sans cabine (3), pour effectuer un échange unique et un enregistrement unique d'informations d'authentification univoques correspondantes et une association statique réciproque dudit au moins un véhicule sans cabine (3), l'unité d'évaluation et de commande (20) côté vêtement étant en outre conçue pour enregistrer, au moins avant chaque début de trajet, en utilisant les informations d'authentification de l'association statique, au moins une grandeur d'état supplémentaire dudit au moins un vêtement de protection (5) du passager et/ou du véhicule sans cabine (3) utilisé et, en communication avec le véhicule sans cabine (3) utilisé, l'unité d'évaluation et de commande (20) côté vêtement étant en outre conçue pour effectuer pour le trajet en cours une association dynamique dudit au moins un dispositif de protection (28) avec le véhicule sans cabine (3) utilisé, si au moins une condition prédéfinie est remplie lors de l'évaluation de ladite au moins une grandeur d'état supplémentaire.

17. Agencement de protection dans un véhicule sans cabine (3), qui est conçu pour mettre en œuvre, en combinaison avec un agencement de protection dans un vêtement de protection (5), le procédé (100) selon l'une des revendications 1 à 11, comprenant un dispositif de communication (14), qui est conçu pour établir une connexion de communication sans fil avec au moins un vêtement de protection (5), et une unité d'évaluation et de commande (10), qui est conçue pour établir une communication sans fil bidirectionnelle (DK) avec ledit au moins un vêtement de protection (5) via le dispositif de communication (14) et, en communication avec ledit au moins un vêtement de protection (5), un échange unique et un enregistrement unique d'informations d'authentification univoques correspondantes et une association statique réciproque dudit au moins un vêtement de protection (5), l'unité d'évaluation et de commande (10) côté véhicule étant en outre conçue pour enregistrer, au moins avant chaque début de trajet, en utilisant les informations d'authentification de l'association statique, au moins une grandeur d'état supplémentaire dudit au moins un vêtement de protection (5) du passager et/ou du véhicule sans cabine (3) utilisé, et, en communication avec ledit au moins un vêtement de protection (5) du passager, l'unité d'évaluation et de commande (10) côté véhicule étant en outre conçue pour effectuer pour le trajet en cours une association dynamique dudit au moins un dispositif de protection (28) au véhicule sans cabine (3) utilisé, lorsqu'au moins une condition prédéfinie est remplie lors de l'évaluation de ladite au moins une grandeur d'état supplémentaire.
